# EUROPÄISCHE PATENTSCHRIFT

(11) **EP 0 850 501 B1**
(45) Veröffentlichungstag und Bekanntmachung des Hinweises auf die Patenterteilung: **17.03.1999**
(21) Anmeldenummer: 96934371.4
(22) Anmeldetag: 23.08.1996
(51) Int. Cl.: H01S 3/131, H01S 3/0941, H01S 3/133

(54) **VERFAHREN UND VORRICHTUNG ZUR ANSTEUERUNG VON DIODENGEPUMPTEN FESTKÖRPERLASERN**
METHOD AND DEVICE FOR TRIGGERING DIODE-PUMPED SOLID STATE LASERS
PROCEDE ET DISPOSITIF LASER POUR DECLENCHER DES LASERS A CORPS SOLIDES POMPES PAR DIODE

(30) Priorität: 05.09.1995 DE 19532648
(43) Veröffentlichungstag der Anmeldung: 01.07.1998
(73) Patentinhaber: Heidelberger Druckmaschinen Aktiengesellschaft, 69115 Heidelberg (DE)
(72) Erfinder: JÜRGENSEN, Heinrich, D-24223 Raisdorf (DE)
(86) Internationale Anmeldenummer: DE9601565
(87) Internationale Veröffentlichungsnummer: WO9711517

(56) Entgegenhaltungen:
- GB-A- 2 256 309
- IEEE PHOTONICS TECHNOLOGY LETTERS, Bd. 2, Nr. 4, 1.April 1990, Seite 244/245 XP000114747 KANE T J: "INTENSITY NOISE IN DIODE-PUMPED SINGLE-FREQUENCY ND: YAG LASERS AND ITS CONTROL BY ELECTRONIC FEEDBACK"
- PATENT ABSTRACTS OF JAPAN vol. 016, no. 567 (E-1296), 8.Dezember 1992 & JP 04 217381 A (FURUKAWA ELECTRIC CO LTD:THE), 7.August 1992,
- PATENT ABSTRACTS OF JAPAN vol. 007, no. 204 (E-197), 9.September 1983 & JP 58 102583 A (OKI DENKI KOGYO KK), 18.Juni 1983,
- PATENT ABSTRACTS OF JAPAN vol. 012, no. 009 (E-572), 12.Januar 1988 & JP 62 169486 A (MATSUSHITA ELECTRIC IND CO LTD), 25.Juli 1987,

## Beschreibung

Die Erfindung bezieht sich auf das Gebiet der Reproduktionstechnik und betrifft ein Verfahren und eine Vorrichtung zur Ansteuerung von diodengepumpten Festkörperlasern. Solche Festkörperlaser neigen zu sogenannten "Ralaxation-Oscillations", die abhängig von der Resonatorgeometrie und der Pumpleistung sind. Wenn der Resonator angeregt wird, entstehen in der Laser-Ausgangsleistung Schwingungen, die nach einer mehr oder weniger langen Zeit abklingen. Obwohl die Amplituden dieser Schwingungen oft nur im Bereich von wenigen Prozent der Laser-Ausgangsleistung liegen, sind Festkörperlaser auf dem Gebiet der Reproduktionstechnik in Belichtern (Recordern) zur Belichtung von Bildern und Farbauszügen nicht ohne weiteres einsetzbar, da sie in den Farbauszügen streifen- oder holzmusterartige unzulässige Bildstörungen erzeugen. Zur Erzeugung einer guten Reproduktionsqualität sind Schwingungsamplituden des Festkörperlasers im Wertebereich von 0,1 bis.0,2 % gerade noch zulässig.

In der Praxis wird deshalb versucht, den Resonator des Festkörperlasers nicht anzuregen und es wird ein besonderer Aufwand getrieben, um z. B. den Betriebsstrom der Laserdiode von Spitzen der Schaltnetzteile zu befreien. Trotzdem lassen sich sporadisch auftretende Schwingungen nicht ganz vermeiden.

Aufgabe der vorliegenden Erfindung ist es daher, ein Verfahren und eine Vorrichtung zur Ansteuerung von diodengepumpten Festkörperlasern derart zu verbessern, daß auch bei Anregung störende Schwingungen unterdrückt werden.

Diese Aufgabe wird erfindungsgemäß dadurch gelöst, daß der Resonator bedämpft wird, indem zusätzlich zu der bereits vorhandenen langsamen Lichtregelung eine schnelle Lichtregelung eingeführt wird, die nur für die Amplitudenstabilität des Festkörperlasers ausgelegt ist.

Die Erfindung wird nachfolgend anhand der Figuren 1 bis 3 näher erläutert.

Es zeigen:
- Fig. 1: eine Ansteuerschaltung für einen diodengepumpten Festkörperlaser nach dem Stand der Technik,
- Fig. 2: eine Ansteuerschaltung für einen diodengepumpten Festkörperlaser nach der Erfindung und
- Fig. 3: eine Kennlinie einer Laserdiode.

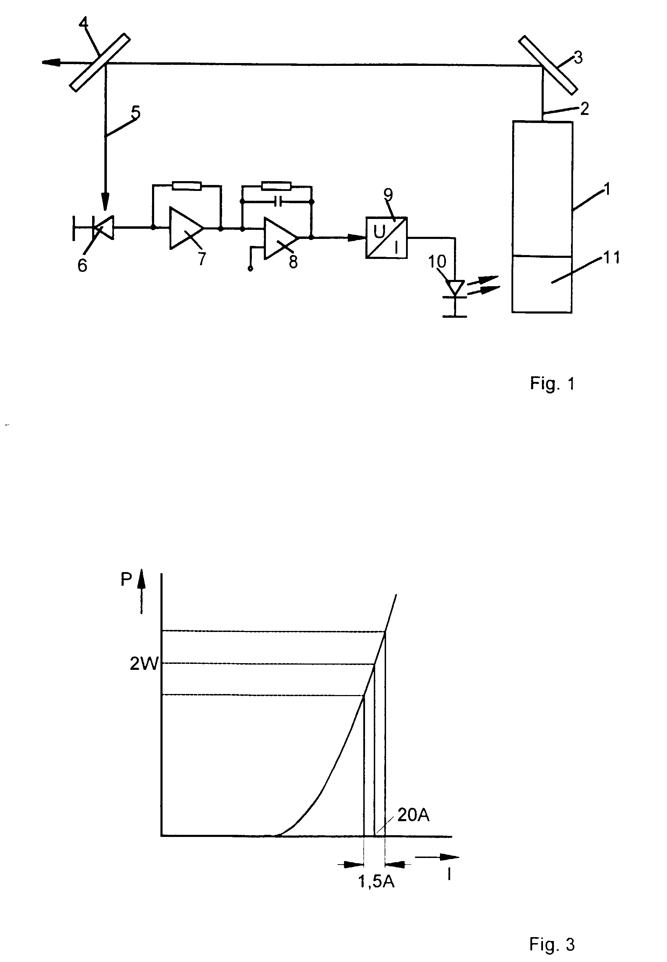

Fig. 1 zeigt eine Ansteuerschaltung oder Treiberschaltung für einen diodengepumpten Festkörperlaser mit einem Gegenkoppelzweig für den niederen Frequenzbereich nach dem Stand der Technik. Ein Lasergenerator (1) erzeugt einen Laserstrahl (2) mit der Lichtleisung (P), der mittels eines Umlenkspiegels (3) umgelenkt wird. Im Strahlengang des Laserstrahles (2) ist ein Strahlteiler (4) angeordnet, der aus dem Laserstrahl (2) einen Meßstrahl (5) abteilt, der ein Maß für die Ist-Lichtleistung des Laserstrahles (2) ist. Der Meßstrahl (5) wird einem Gegenkopplungszweig bzw. einer Regelschleife zugeführt und fällt dort auf eine Lichtmeßdiode (6), der ein schneller Lichtmeßverstärker (7) nachgeschaltet ist. Ein in dem Lichtmeßverstärker (7) erzeugtes Meßsignal wird an einen Regelverstärker (8) weitergegeben, der an den Lichtmeßverstärker (7) angeschlossen ist. Dem einen Eingang des Regelverstärkers (8) wird der im Lichtmeßverstärker (7) festgestellte Lichtleistungs-lstwert (P_{IST}) zugeführt, während der andere Eingang mit dem Lichtleistungs-Sollwert (P_{SOLL}) beaufschlagt ist. Das in dem Regelverstärker (8) gewonnene Regelsignal wird einem nachgeschalteten Spannungs/Strom-Wandler (9) zugeführt. Der Spannungs/Strom-Wandler (9), der beispielsweise aus Hochleistungs-Transistoren aufgebaut ist, dient zur Erzeugung eines Treiberstromes von z. B. 20 A für eine als Pumpdiode arbeitende Laserdiode (10), die einen Laserresonator (11) in dem Lasergenerator (1) anregt.

Die "Relaxation Oscillations" liegen bei den bekannten Festkörperlasern im typischen Wertebereich von 50 bis 100, gelegentlich auch bis 200 kHz. Diese hochfrequenten "Relaxation Oscillations" können mit der beschriebenen Ansteuerschaltung nicht in befriedigender Weise eliminiert werden, da die Bandbreite der Regelschleife, bedingt durch die relativ geringe Grenzfrequenz der verwendeten Hochleistungs-Transistoren, zu niedrig ist, um auch die hochfrequenten Störungen gegenzukoppeln.

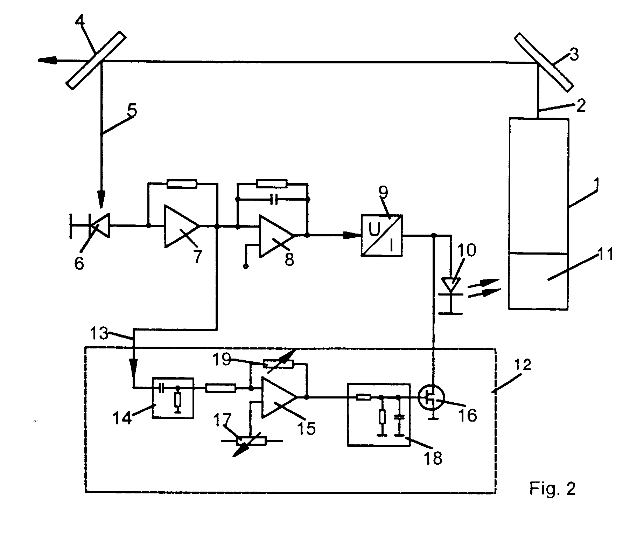

Fig. 2 zeigt eine Ansteuerschaltung oder Treiberschaltung für einen diodengepumpten Festkörperlaser mit der erfindungsgemäßen elektrischen Dämpfung der hochfrequenten "Relaxation Oscillations".

Zur Durchführung der erfindungsgemäßen elektrischen Dämpfung der "Relaxation Oscillations" ist die in Fig. 1 gezeigte bekannte Ansteuerschaltung in der Fig. 2 durch einen zweiten Gegenkopplungszweig (12) für den hohen Frequenzbereich, d.h. durch eine schnellen Regelschleife, ergänzt.

Das in der Lichtmeßdiode (6) erzeugte und in dem Lichtmeßverstärker (7) verstärkte Meßsignal wird über eine Leitung (13) einem Hochpaß-Filter (14) in dem Rückführungszweig (12) zugeführt. Die Lichtmeßdiode (6) muß dabei derart beschaffen sein, daß sie die Amplituden der hochfrequenten Störungen messen kann. Das Hochpaß-Filter (14) koppelt nur den hochfrequenten Anteil des Meßsignals vom Lichtmeßverstärker (7) aus. Das Ausgangssignal des Hochpaß-Filters (14), welches das hochfrequente Störsignal, die "Relaxation Oscillations", repräsentiert, wird an den ersten Eingang eines schnellen Regelverstärkers (15) gegeben. Dabei ist wichtig, daß der Lichtmeßverstärker (7) bereits eine ausreichende Bandbreite hat, um das Störsignal voll zu übertragen. Für die Stabilität des schnellen Regelkreises (12) ist es vorteilhaft, wenn seine Bandbreite um den Faktor 10 höher ist, damit keine störenden Phasenverzerrungen auftreten. Der Laserdiode (10) ist ein schneller Bipolar- oder Feldeffekttransistor (16) parallel geschaltet, dessen Basisstrom in dem schnellen Regelverstärker (15) erzeugt wird. Der Bipolar- oder Feldeffekttransistor (16) zweigt einen kleinen Anteil von z. B. 1,5 A des durch die Laserdiode (10) fließenden Treiberstromes von z. B. 20 A ab, wodurch eine schnellere Modulation erreicht wird. Die Laserdiode (10) sollte derart beschaffen sein, daß sie in demjenigen Frequenzbereich, in dem die hochfrequenten Störungen auftreten, durch Stromänderungen modulierbar ist. Im allgemeinen können Laserdioden aber weit in den Megahertz-Bereich moduliert werden.

Der Arbeitspunkt des Bipolar- oder Feldeffekttransistors (16) wird über das Potentiometer (17) eingestellt, das an dem zweiten Eingang des schnellen Regelverstärkers (15) liegt. Die Signalphasenrichtung ist so eingestellt, daß eine größere Störungsamplitude am Eingang des schnellen Regelverstärkers (15) eine Vergrößerung des Stromes durch den Bipolar- oder Feldeffekttransistor (16) zur Folge hat und damit eine Verringerung des Treiberstromes die Laserdiode (10) bewirkt. Hierdurch wird die Amplitude des Lichtes der als Pumpdiode arbeitenden Laserdiode (10) verringert und damit in vorteilhafter Weise eine Verkleinerung der "Relaxation Oscillations" durch Bedämpfung bewirkt.

Das aus Widerständen und Kondensatoren bestehende Netzwerk (18) sorgt für eine richtige Anpassung der Phasenkurve des Systems, damit für die Regelschleife die Stabilitätsbedingung erfüllt ist und im gesamten Bereich, in dem "Relaxation Oscillations" auftreten können, eine ausreichende Gegenkopplung vorhanden ist. Der Grad der Dämpfung kann mit einem die Schleifenverstärkung verändernden Regler (19) im Rückkopplungszweig des schnellen Regelverstärkers (15) eingestellt werden. Das Netzwerk (18) kann beliebig abgewandelt werden oder auch aus aktiven und passiven Bauelementen bestehen. Dies gilt insbesondere dann, wenn Totzeiten, wie sie im Laserresonator und den Koppel leitungen vorhanden sind, unerwünschte Phasendrehungen erzeugen. Diese sind zu kompensieren, um im erforderlichen Frequenzbereich eine stabile Regelschleife mit ausreichender Schleifenverstärkung zu erreichen.

Fig. 3 zeigt die Kennlinie der Laserdiode (10), in der die Abhängigkeit der Lichtleistung (P) vom Strom (I) dargestellt ist. Es ist dargestellt, daß bereits ein Strom von beispielsweise 1,5 A ausreichend ist, um 5% Amplitudenänderung in der Lichtleistung zu erzeugen, während der Treiberstrom der Laserdiode (10) z. B. bei 20 A liegt.

## Patentansprüche

1. Verfahren zur Ansteuerung eines diodengepumten Festkörperlasers, bei dem
- ein Meßsignal als Istwert der von dem Festkörperlaser (1) abgegebenen Lichtleistung für einen Regelkreis ermittelt wird,
- durch Vergleich des Meßsignals mit einem vorgegebenen Lichtleistungs-Sollwert eine Regelabweichung festgestellt wird und
- die festgestellte Regelabweichung in einen Treiberstrom für eine als Pumpdiode für einen Resonator (11) des Festkörperlasers (1) verwendete Laserdiode (10) umgewandelt wird, **dadurch gekennzeichnet,** daß zur Dämpfung von höherfrequenten Störungen der Lichtleistung
- die höherfrequente Komponente des Meßsignals herausgefiltert und einem zusätzlichen Regelkreis (12) hoher Bandbreite zugeführt wird und
- ein Anteil des der Laserdiode (10) zugeführte Treiberstromes in Abhängigkeit von der herausgefilterten, höherfrequenten Komponente des Meßsignals geregelt wird.

2. Verfahren nach Anspruch 1, **dadurch gekennzeichnet,** daß der Anteil des in Abhängigkeit von der höherfrequenten Komponente des Meßsignals geregelten Treiberstromes 0,5 bis 50% des Treiberstromes beträgt.

3. Verfahren nach Anspruch 1 oder 2, **dadurch gekennzeichnet,** daß die Laserdiode (10) in dem Frequenzbereich der höherfrequenten Störungen der abgegebeben Lichtleistung geregelt wird.

4. Verfahren nach einem der Ansprüche 1 bis 3, **dadurch gekennzeichnet,** daß die Wirkungsrichtung des Regelsignals in dem zusätzlichen Regelkreis (12) derart gewählt wird, daß eine Amplitudenvergrößerung der höherfrequenten Komponente des Meßsignals eine Verkleinerung des der Laserdiode (10) zugeführten Treiberstromes bewirkt.

5. Verfahren nach einem der Ansprüche 1 bis 4, **dadurch gekennzeichnet,** daß der Grad der Dämpfung der höherfrequenten Störungen der von der Laserdiode (10) abgegebenen Lichtleistung durch die Schleifenverstärkung des zusätzlichen Regelkreises (12) eingestellt wird.

6. Vorrichtung zur Ansteuerung eines diodengepumten Festkörperlasers, bestehend aus
- einem Festkörperlaser (1) mit einem Resonator (11),
- einer als Pumpdiode für den Resonator (11) verwendeten Laserdiode (10),
- einer Meßeinrichtung (4, 6, 7) zur Ermittlung eines Meßsignals als Istwert der von dem Festkörperlaser (1) abgegebenen Lichtleistung für einen Regelkreis,
- einem an die Meßeinrichtung (4, 6, 7) angeschlossenen Regel verstärker (8) zur Feststellung einer Regelabweichung durch Vergleich des Meßsignals mit einem vorgegebenen Lichtleistungs-Sollwert und
- einem dem Regelverstärker (8) nachgeschalteten Wandler (9) zur Erzeugung eines der festgestellten Regelabweichung entsprechenden Treiberstromes für die Laserdiode (10), **gekennzeichnet durch**
- einen zusätzlichen Regelkreis (12) hoher Bandbreite mit
- einem an die Meßvorrichtung (4, 6, 7) angeschlossenen Hochpaß-Filter (14) zur Herausfilterung der höherfrequenten Komponente aus dem Meßsignal,
- einem dem Hochpaß-Filter (14) nachgeschalteten schnellen Regelverstärker (15) und mit
- einem Stellglied (16) zur Regelung eines Anteiles des der Laserdiode (10) zugeführte Treiberstromes in Abhängigkeit von der herausgefilterten, höherfrequenten Komponente des Meßsignals.

7. Vorrichtung nach Anspruch 6, **dadurch gekennzeichnet,** daß das Stellglied (16) der Laserdiode (10) parallelgeschaltet ist.

8. Vorrichtung nach Anspruch 6, **dadurch gekennzeichnet,** daß das Stellglied (16) dem Wandler (9) parallelgeschaltet ist.

9. Vorrichtung nach einem der Ansprüche 6 bis 8, **dadurch gekennzeichnet,** daß die Meßeinrichtung (4, 6, 7) aus einem teildurchlässigen Spiegel (4) im Strahlengang des Festkörperlasers (1), einer Lichtmeßdiode (6) und einem Lichtmeßverstärker (7) besteht.

10. Vorrichtung nach einem der Ansprüche 6 bis 9, **dadurch gekennzeichnet,** daß das Stellglied (16) ein Bipolar- oder Feldeffekttransistor ist, der in Abhängigkeit von der höherfrequenten Komponente des Meßsignals steuerbar ist.

11. Vorrichtung nach Anspruch 10, **dadurch gekennzeichnet,** daß der Arbeitspunkt des Bipolar- oder Feldeffekttransistors einstellbar ist.

12. Vorrichtung nach einem der Ansprüche 6 bis 11, **dadurch gekennzeichnet,** daß der zusätzliche Regelkreis (12) ein Netzwerk (18) zur Anpassung der Amplituden/Phasen-Charakteristik des zusätzlichen Regelkreises (12) aufweist.

## Claims

1. A method for controlling a diode-pumped solid body laser, in which
- a measurement signal is determined as actual value of the light output emitted from the solid body laser (1) for a regulating circuit,
- through comparison of the measurement signal with a given light output nominal value a regulating deviation is established and
- the established regulating deviation is converted into a driver current for a laser diode (10) which is used as pump diode for a resonator (11) of the solid body laser (1),
**characterised in that** for the damping of higher-frequency interferences of the light output
- the higher frequency component of the measurement signal is filtered out and supplied to an additional regulating circuit (12) of higher band width and
- a proportion of the driver current which is supplied to the laser diode (10) is regulated as a function of the filtered-out, higher frequency component of the measurement signal.

2. A method according to Claim 1, **characterised in that** the proportion of the driver current which is regulated as a function of the higher frequency component of the measurement signal amounts to 0.5 to 50 % of the driver current.

3. A method according to Claim 1 or 2, **characterised in that** the laser diode (10) is , regulated in the frequency range of the higher frequency interferences of the emitted light output.

4. A method according to one of Claims 1 to 3, **characterised in that** the effective direction of the regulating signal in the additional regulating circuit (12) is selected such that an amplitude increase of the higher frequency component of the measurement signal brings about a reduction to the driver current which is supplied to the laser diode (10).

5. A method according to one of Claims 1 to 4, **characterised in that** the degree of damping of the higher frequency interferences of the light output emitted by the laser diode (10) is adjusted by the loop amplification of the additional regulating circuit (12).

6. A device for controlling a diode-pumped solid body laser, consisting of
- a solid body laser (1) with a resonator (11),
- a laser diode (10) used as pump diode for the resonator (11),
- a measurement device (4, 6, 7) for determining a measurement signal as actual value of the light output emitted from the solid body laser (1) for a regulating circuit,
- a regulating amplifier (8) connected to the measurement device (4, 6, 7) to establish a regulating deviation through comparison of the measurement signal with a given light output nominal value and
- a converter (9) connected after the regulating amplifier (8) to generate a driver current for the laser diode (10) corresponding to the established regulating deviation, **characterised by**
- an additional regulating circuit (12) of high band width with
- a high-pass filter (14) connected to the measurement device (4, 6, 7) for filtering out the higher frequency component from the measurement signal,
- a rapid regulating amplifier (15) connected after the high-pass filter (14) and with
- an adjusting member (16) to regulate a proportion of the driver current supplied to the laser diode (10) as a function of the filtered-out, higher frequency component of the measurement signal.

7. A device according to Claim 6, **characterised in that** the adjusting member (16) is connected in parallel with the laser diode (10).

8. A device according to Claim 6, **characterised in that** the adjusting member (16) is connected in parallel with the converter (9).

9. A device according to one of Claims 6 to 8, **characterised in that** the measurement device (4, 6, 7) consists of a partially translucent mirror (4) in the path of rays of the solid body laser (1), of a light measurement diode (6) and of a light measurement amplifier (7).

10. A device according to one of Claims 6 to 9, **characterised in that** the adjusting member (16) is a bipolar- or field effect transistor which is controllable as a function of the higher frequency component of the measurement signal.

11. A device according to Claim 10, **characterised in that** the operating point of the bipolar- or field effect transistor is adjustable.

12. A device according to one of Claims 6 to 11, **characterised in that** the additional regulating circuit (12) has a network (18) for adapting the amplitude/phase characteristic of the additional regulating circuit (12).

## Revendications

1. Procédé pour commander un laser solide pompé par une diode, dans lequel
- on détecte un signal de mesure en tant que valeur réelle du flux lumineux délivré par le laser solide (1) pour un circuit de réglage,
- on détermine, par comparaison du signal de mesure avec une valeur de consigne prédéfinie du flux lumineux, une déviation de réglage, et
- on convertit la déviation de réglage déterminée, en un courant d'attaque pour une diode laser (10) utilisée comme diode de pompage pour un résonateur (11) du laser solide (1),
caractérisé en ce que
pour amortir des parasites à haute fréquence du flux lumineux :
- on extrait par filtrage la composante à haute fréquence du signal de mesure et on l'amène à un circuit de réglage additionnel (12) à largeur de bande élevée, et
- on règle une fraction du courant d'attaque, amené à la diode laser (10), en fonction de la composante extraite par filtrage, à haute fréquence, du signal de mesure.

2. Procédé selon la revendication 1,
caractérisé en ce que
la fraction du courant d'attaque réglée en fonction de la composante du signal de mesure, à haute fréquence, atteint 0,5 à 50 % du courant d'attaque.

3. Procédé selon la revendication 1 ou 2,
caractérisé en ce que
la diode laser (10) est réglée dans la zone de fréquences des parasites à haute fréquence du flux lumineux délivré.

4. Procédé selon l'une des revendications 1 à 3,
caractérisé en ce que
l'on choisit le sens d'action du signal de réglage dans le circuit de réglage additionnel (12), d'une manière telle qu'une augmentation de l'amplitude de la composante à haute fréquence du signal de mesure provoque une réduction du courant d'attaque amené à la diode laser (10).

5. Procédé selon l'une des revendications 1 à 4,
caractérisé en ce que
le degré d'amortissement des parasites à haute fréquence du flux lumineux délivré par la diode laser (10) est réglé par l'amplification de boucle du circuit additionnel de réglage (12).

6. Dispositif servant à commander un laser solide pompé par une diode, comprenant :
- un laser solide (1) avec un résonateur (11),
- une diode laser (10) utilisée comme diode de pompage pour le résonateur (11),
- un système de mesure (4, 6, 7) servant à détecter un signal de mesure comme valeur réelle du flux lumineux délivré par le laser solide (1) pour un circuit de réglage,
- un amplificateur de réglage raccordé au système de mesure (4, 6, 7) et servant à déterminer une déviation de réglage par comparaison du signal de mesure avec une valeur de consigne prédéfinie du flux lumineux et
- un convertisseur (9) monté en aval de l'amplificateur de réglage (8), convertisseur qui sert à produire un courant d'attaque correspondant à la déviation de réglage déterminée, pour la diode laser (10),
caractérisé par
- un circuit de réglage additionnel (12) à largeur de bande élevée avec :
- un filtre passe-haut (14) raccordé au système de mesure ( 4, 6, 7) et servant à extraire du signal de mesure, par filtrage, la composante à haute fréquence,
- un amplificateur de réglage (15) rapide, monté en aval du filtre passe-haut (14), et
- un organe de réglage (16) servant à régler une fraction du courant d'attaque amené à la diode laser (10), en fonction de la composante extraite par filtrage, à fréquence élevée, du signal de mesure.

7. Dispositif selon la revendication 6,
caractérisé en ce que
l'organe de réglage (16) de la diode laser (10) est montée en parallèle.

8. Dispositif selon la revendication 6,
caractérisé en ce que
l'organe de réglage (16) est monté en parallèle au convertisseur (9).

9. Dispositif selon l'une des revendications 6 à 8, caractérisé en ce que
le système de mesure (4, 6, 7) est constitué par un miroir semi-transparent (4) placé sur la trajectoire lumineuse du laser solide (1), une diode photométrique (6) et un amplificateur photométrique (7)

10. Dispositif selon l'une des revendications 6 à 9,
caractérisé en ce que
l'organe de réglage (16) est un transistor bipolaire ou un transistor à effet de champ, qui peut être commandé en fonction de la composante à haute fréquence du signal de mesure.

11. Dispositif selon la revendication 10,
caractérisé en ce que
l'on peut régler le point de fonctionnement du transistor bipolaire ou du transistor à effet de champ.

12. Dispositif selon l'une des revendications 6 à 11,
caractérisé en ce que
le circuit de réglage additionnel (12) présente un réseau (18) servant à adapter la caractéristique amplitudes/phases du circuit de réglage additionnel (12).
